Europäisches Patentamt

European Patent Office

Office européen des brevets

(19)

(11) Publication number:  **0 136 605**
**A2**

(12) # EUROPEAN PATENT APPLICATION

(21) Application number: **84110961.4**

(22) Date of filing: **13.09.84**

(51) Int. Cl.⁴: **B 01 J 20/28**

(30) Priority: **30.09.83 JP 183929/83**

(43) Date of publication of application:
**10.04.85 Bulletin 85/15**

(84) Designated Contracting States:
**BE DE GB**

(71) Applicant: **KURARAY CO., LTD.**
**1621 Sakazu**
**Kurashiki-City Okayama Prefecture(JP)**

(72) Inventor: **Mizutani, Makoto**
**10-28 Kureha-cho Tsuto**
**Nishinomiya-City(JP)**

(72) Inventor: **Maekawa, Minoru**
**4-29 Nakano-machi Bessho**
**Takatsuki-City(JP)**

(72) Inventor: **Hanamori, Ichiro**
**10-28 Kureha-cho Tsuto**
**Nishinomiya-City(JP)**

(74) Representative: **Strehl, Schübel-Hopf, Schulz**
**Widenmayerstrasse 17 Postfach 22 03 45**
**D-8000 München 22(DE)**

(54) **Adsorbent Sheet Material.**

(57) An adsorptive sheet material which comprises a breathable substrate sheet (1) and short fibers (2) of active carbon bonded thereto by electrostatic flocking. The short fibers of active carbon are bonded perpendicular to the substrate at one end only. Because of this structure, they are durable when the substrate is bent. The adsorptive sheet material is superior in breathability, permeability, and flexibility, and is light in weight, while it maintains the adsorptive properties of active carbon fibers.

F I G. 1

EP 0 136 605 A2

ADSORBENT SHEET MATERIAL

BACKGROUND OF THE INVENTION

Field of the Invention

The present invention relates to a sheet-like material which, because of its outstanding adsorption performance and durability, can be used as an adsorbent and filter for gases and liquids and also as a raw material for garments which protect against exposure to toxic gases. More particularly, it relates to a sheet material made of active carbon fiber which is superior in adsorption performance, breathability, permeability, and flexibility, and is light in weight. The active carbon fiber (abbreviated as ACF hereinafter) is highly durable even when the sheet material is bent during use.

Description of the Prior Art

In the past, woven fabrics and unwoven fabrics made of ACF have been in general use as adsorbent sheets for the removal of hazardous and toxic substances from gases and liquids. The adsorbent sheets for these utilities must exhibit superior adsorption performance, breathability, permeability, and flexibility, and must be light in weight. The sheets must also be highly resistant to mechanical fatigue which occurs for instance, when the sheets are bent during use. In fact, losses of ACF sheets occurs during use of the same which is quite undesirable. Unfortunately, ACF, which is prepared by carbonizing and activating organic fiber to a high degree, is very low in strength and elongation characteristics and consequently is very brittle. Therefore, conventional adsorbent materials made from ACF lack resistance to bending encountered during use of the material. As ACF breaks, it splits and wears into holes, which often causes problems.

Some attempts have been made to overcome these disadvantages. For example, one procedure is to integrate ACF by a resin treatment, or to reinforce a woven fabric or unwoven fabric of ACF with a bonded backing. The procedures still have drawbacks. The resin treatment has the problem that it lowers the adsorption performance of ACF. The reinforcement treatment, which is the provision of a backing, does not prevent an ACF sheet from breaking when the sheet material is bent. Rather, the backing decreases the breathability and permeability of the sheet and makes the sheet stiffer and heavier.

To sum up, the losses in adsorption performance of ACF sheets and the brittleness of ACF cannot be avoided so long as ACF is used in the form of unwoven fabric or woven fabric. A need therefore continues to exist for an ACF sheet of improved characteristics.

## SUMMARY OF THE INVENTION

Accordingly, one object of the present invention is to provide a sheet-like adsorbent material which exhibits high resistance to bending distortion when bent during use, without sacrificing the outstanding adsorption properties of ACF.

Another object of the present invention is to provide a sheet-like adsorbent material which is superior in adsorption performance, durability, breathability, permeability, and flexibility, and light in weight.

Yet another object of the present invention is to provide a sheet-like adsorbent material of new construction made from ACF.

Briefly, these objects and other objects of the present invention as hereinafter will become more readily apparent, can be attained by an adsorptive sheet material of a breathable substrate sheet and short fibers of active carbon bonded thereto by electrostatic flocking.

## BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:

FIGURE 1 is a schematic sectional view of the basic structure of the adsorbent sheet material of the present invention;

FIGURE 2 is a schematic sectional view of an embodiment of the present invention, in which the ACF flock layer is covered with a protecting knitted or woven fabric; and

FIGURE 3 is a schematic sectional view of another embodiment of the present invention, in which the ACF flock layer is covered with a protecting fabric and the substrate is treated with a fluorine compound or silicone compound for water and oil repellence.

## DETAILED DESCRIPTION OF THE PREFERRED EMBODIMENTS

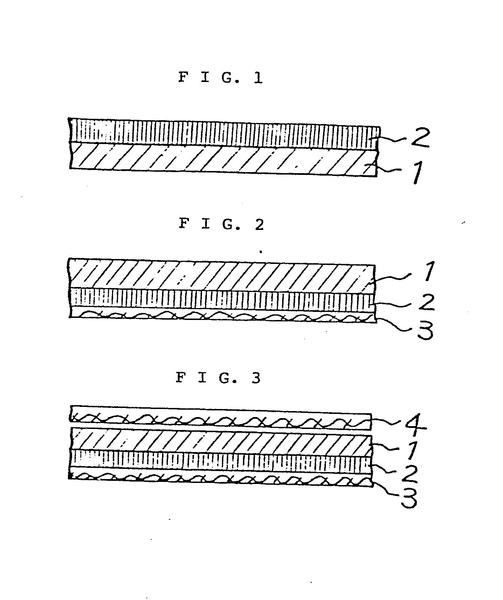

The adsorbent sheet material of the present invention is not one which is made from woven fabric or nonwoven fabric of ACF, but rather is one which is constructed of a substrate 1 of natural or man-made fiber

and an ACF adsorbent layer 2 formed thereon by electrostatic flocking of ACF short fiber, as shown in FIGURE 1.

Since ACF is a highly conductive fiber, as is well known, no one has proposed the electrostatic flocking of ACF which appears to be a logical conclusion since one skilled in the art would not expect electrostatic flocking to work with highly conductive fibers. (Electrostatic flocking is an electrical process by which a flock of ACF is applied to a fabric substrate.)

In electrostatic flocking, flock is electrically charged in an electrostatic field to which 10 to 100 kV it applied by a high-voltage generator, and the charged flock is shot onto the adhesive-treated fabric (substrate). If the flock is electrically conductive like ACF, it will cause short-circuiting (sparks). Because of this fact, no one has yet conceived of electrostatic flocking of ACF.

In view of the fact that conventional adsorbent sheets made of ACF have the inherent disadvantages mentioned above, the present inventors conducted investigations on the fabrication of an adsorbent sheet material which has a different structure from the conventional structure, with the objective being to achieve the electrostatic flocking of ACF.

The adsorbent sheet material of the present invention is made up of a substrate having a flocked

ACF layer formed thereon. The substrate is a tough fabric sheet, and the individual short fibers of ACF flock are bonded to the substrate by one end only. This structure prevents the ACF from breaking and falling when the substrate of the adsorbent sheet material is bent. In addition, the individual short fibers of ACF flock are bonded perpendicular to the substrate with a very small amount of adhesive, and they are densely flocked. On account of this structure, the adsorbent sheet material is superior in adsorption performance, breathability, permeability, and flexibility, and is light in weight.

The following is a detailed description of the struture and method of fabrication of the adsorbent sheet material.

The substrate 1 should be breathable so that the finished adsorbent sheet material maintains the breathability of 1 $cc/cm^2/sec$ (as measured according to JIS L-1096, Method A). Suitable substrates include paper, nonwoven fabrics, knitted fabrics, and woven fabrics.

It is important to the present invention that the breathability of the substrate should not be reduced by the adhesive applied to the same for the flocking. To prevent a large amount of adhesive from adhering to or penetrating into the substrate, it is desirable to treat the flocking face of the substrate with a water repellent or oil repellent. In addition, to prevent the adhesive from forming an impervious film, the adhesive should be an emulsion-type adhesive and the substrate should have a rough surface. Nonwoven fabrics or raised knitted or woven fabrics are desirable in this respect. Also desirable is an adhesive layer of a foamed structure formed by the incorporation of a blowing agent therein.

The ACF used in this invention is made by carbonizing, followed by activation, rayon, phenolic fiber, polyvinyl alcohol fiber, polyacrylonitrile fiber, or pitch fiber.

The ACF for flocking is 5 to 30 m in diameter and 0.1 to 5 mm long. The best result is obtained when ACF, 6 to 20 m in diameter and 0.3 to 3 mm long, is flocked so that a density of 20 to 400 $g/m^2$ is established. Such flocking has good durability and breathability, and provides the ACF with a large surface area for adsorption.

The flocking can be accomplished by any known method. The flock may be shot upward from a position underneath the sheet (upward method) or vice versa (downward method). Since the individual ACF fibers are bonded perpendicular to the substrate, the adsorbent sheet material possesses superior breathability and permeability. Moreover, the fibers are in contact with the adhesive at only one end thereof and their adsorption performance is hardly affected by the adhesive.

In the preferred flocking method, the flock is shot downward to the substrate while the substrate is being passed over a mechanical or supersonic vibrator.

Since the ACF flock is highly conductive as mentioned above, the voltage for static charge should normally be low; otherwise, electric sparks will occur, causing dust explosions.

The process for producing the adsorbent sheet material of the present invention is different from the conventional one in that the voltage of the static charge is 1 to 10 kV, preferably 2 to 5 kV.

The ACF flock layer 2 formed on the substrate 1 as mentioned above should preferably be covered with a breathable protecting fabric 3. The protecting fabric should be bonded to the ACF flock layer with an adhesive spotted thereon so that the ACF flock layer is not totally enclosed. This is shown in FIGURE 2.

According to another embodiment of the present invention, the flocking of the ACF is performed on both sides of the substrate. In this case, the protecting sheets are attached to both ACF flock layers.

Because of high flexing resistance, the adsorbent sheet material of the present invention finds use as a raw material for the manufacture of protective clothing which is resistant to chemicals. For such applications, the ACF flock layer 2 is covered with a protecting fabric 3 and the substrate 1 is treated with a fluorine compound or silicone compound for water and oil repellence. This is illustrated in FIGURE 3.

The adsorbent sheet material of the present invention is very durable and adsorbent as mentioned above. Therefore, it is useful as an adsorbent and filter for gases and liquids and as a raw material for the manufacture of comfortable protective clothing against toxic gases.

Having generally described the invention, a further understanding can be obtained by reference to certain specific examples which are provided herein for purposes of illustration only and are not intended to be limiting unless otherwise specified.

EXAMPLE 1

An adsorbent sheet material was prepared by flocking (downward method) ACF (10 m in diameter and 0.5 mm long) made from phenolic fiber, onto a substrate of nonwoven fabric which had been treated with a fluorine-type water and oil repellent, having 2% pick-up active ingredient, (Asahi Guard AG 710, a product of Asahi Glass Co., Ltd.), and thinly coated (55 g/m$^2$) with an acrylic emulsion-type adhesive (Nipol LX 860, a product of Nippon Zeon Co., Ltd.).  The nonwoven fabric is made from a 75/25 blend of polyester fiber and core spun yarn (polypropylene core and polyethylene sheath), and it has a weight of 110 g/m$^2$.  The thickness of fiber is 2 denier and the length of fiber is 51 mm. The flocking voltage was 3 kV, and the flocking density was $1 \times 10^6$ fibers/cm$^2$ (50 g/m$^2$).

## EXAMPLE 2

An adsorbent sheet material having a protecting sheet was prepared by attaching a plain weave ($^*$) of polyester fiber to the top of the flocked ACF layer. Bonding was accomplished by ironing (150°C) the plain weave placed on the flocked ACF layer.  The plain weave was previously provided with powder particles of ethylene-vinyl acetate copolymer (EVA) in an amount of as many as 30 particles/in$^2$.

$$* \quad \frac{60'S/1 \times 60'S/1}{60 \times 60}$$

## EXAMPLE 3

An adsorbent sheet material was prepared by applying, in the same way as in Example 1, the flock of phenolic-type ACF to a plain weave ($^*$) of polyester fiber which had previously been raised by card clothing and treated with a fluorine-type water and oil repellent (Asahi Guard AG 710, a product of Asahi Glass Co., Ltd.), having 2% pick-up active ingredient.

The resulting product was very flexible and breathable because the emulsion-type acrylic adhesive hardly penetrated into the substrate fabric.

$$\star \quad \frac{39\text{'S}/2 \times 39\text{'S}/2}{52 \times 45}$$

The performance of the adsorbent sheet materials prepared as described in the examples is summarized in Table 1.

## Table 1

| Example | Weight $(g/m^2)$ | Breath-ability $(cc/cm^2/sec)$ | Bending resist-ance (mm) | Adsorption of $CCl_4$ $(g/cm^2)$ | Falling of ACF |
|---|---|---|---|---|---|
| 1 | 217 | 112 | 57 | 32.5 | None |
| 2 | 280 | 106 | 60 | 32.5 | None |
| 3 | 260 | 35 | 55 | 34.0 | None |
| Test method | JIS L-1086 | JIS L-1096 Method A | JIS L-1096 Method A 45° canti-lever | JIS L-1474 | See note |

Note:  The specimen was cut to a size of 20 x 20 cm, and the cut ends were overcast by using an overlock machine. Both sides of the test piece were rubbed by hand 50 times each in order to observe any falling of ACF.

- 1 -

0136605

CLAIMS

1.  An adsorptive sheet material comprising a breathable substrate sheet (1) and short fibers (2) of active carbon bonded thereto by electrostatic flocking.

2.  The sheet material of claim 1, wherein the substrate sheet (1) is a nonwoven fabric or a raised knitted or woven fabric.

3.  The sheet material of claim 1 or 2, wherein the short active carbon fibers (2) are 5 to 30 m in diameter and 0.1 to 5 mm long.

4.  The sheet material of any of claims 1 to 3, wherein the flocking density of the short active carbon fibers (2) is 20 to 400 $g/m^2$.

5.  The sheet material of any of claims 1 to 4, further comprising a breathable protective sheet (3) bonded to the layer (2) of flocking.

6.  The sheet material of claim 5, wherein the protective sheet (3) is a knitted or woven fabric.

7.   The sheet material of any of claims 1 to 5, wherein said short fibers are provided on both sides of said substrate (1).

8.   The sheet material of any of claims 1 to 5, wherein said substrate (1) is treated with a fluorine compound or silicone compound.

F I G. 1

F I G. 2

F I G. 3

0136605

1/1